# EUROPEAN PATENT APPLICATION

(11) **EP 4 513 256 A1**
(43) Date of publication of application: **26.02.2025**
(21) Application number: 23193009.0
(22) Date of filing: 23.08.2023
(51) Int. Cl.: G02C 7/02, B29D 11/00, B33Y 80/00

(54) **METHOD FOR CALCULATING A DIGITAL TWIN OF A SPECTACLE LENS**

(71) Applicant: Carl Zeiss Vision International GmbH, 73430 Aalen (DE)
(72) Inventor: Gloege, Thomas, 73430 Aalen (DE); Castro Smirnov, Jose Raul, 73430 Aalen (DE); Reese, Martin, 73430 Aalen (DE); Puetz, Joerg, 73430 Aalen (DE)
(74) Representative: Carl Zeiss AG - Patentabteilung

(57) **Abstract**

The present invention relates to a method for calculating a digital twin of a spectacle lens having a curved lens surface for the purpose of a use of the digital twin for a manufacture of the spectacle lens, said digital twin of the spectacle lens comprising a layer stack with individual layers, the method being characterized in the step of
- determining said layer stack such that a form of an interface of an individual layer replicates said curved lens surface of said digital twin.

## Description

The present invention relates to a method for calculating a digital twin of a spectacle lens according to the preamble of claim 1.

### Related prior art

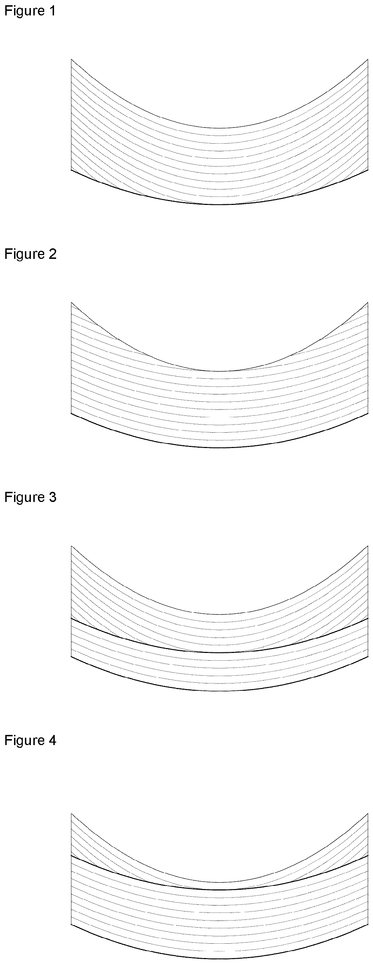

WO 2021/209551 A1 discloses a method for printing a three-dimensional optical component. With respect to figure 1 the optical component comprises flat slices whose thicknesses and lateral dimensions are calculated. The respective layers are printed to match the calculated thicknesses and lateral dimensions while controlling and compensating possible deviations by placing ink droplets according to a dither pattern. To locally compensate for larger excesses of thickness, the dither pattern locally schedules more spaces where no droplet shall be placed. To locally compensate for lower excesses of thickness, the dither pattern locally schedules less spaces where no droplet shall be placed.

### Problem to be solved

Departing from WO 2021/209551 A1, figure 1(c), and page 1, lines 26 to 28, describing superelevations occurring at edges of a printed layer due to a surface tension of a printing ink, as shown in WO 2021/209551 A1, figure 2, the superelevations described as being very small for a single layer but adding up and resulting in a printed optical component differing from the intended shape, the problem to be solved by the present invention is to minimize a total number of layers to be printed and thus to minimize such an adding up of superelevations at an edge of a printed layer.

### Summary of the invention

The problem has been solved by the method according to claim 1.

Preferred embodiments, which might be realized in an isolated fashion or in any arbitrary combination, are listed in the dependent claims.

The method being configured for calculating by a computer a digital twin of a spectacle lens having a curved lens surface for the purpose of a use of the digital twin for a manufacture of the spectacle lens, said digital twin of the spectacle lens comprising a layer stack with individual layers, is characterized in the step of - determining said layer stack such that a form of an interface of an individual layer replicates said curved lens surface of said digital twin.

A "digital twin of a spectacle lens" is a mathematical description of a front surface of the spectacle lens, a mathematical description of a back surface of the spectacle lens, and a mathematical description of a refractive index of an optical material of the spectacle lens. The digital twin of the spectacle lens is for the purpose of a use for manufacturing the spectacle lens. The mathematical descriptions include an orientation of the front surface to the back surface. Therefore, preferably, either the front surface and the back surface are described in a same coordinate system or a transformation between a coordinate system of the front surface to a coordinate system of the back surface, or vice versa, is known. The mathematical descriptions preferably are closed mathematical descriptions. The mathematical descriptions of the front surface and the back surface preferably result from an optimization towards an optical target for the spectacle lens. The mathematical descriptions may result from a mathematical fit to a point cloud defining discrete x,y,z positions of the front surface and of the back surface. The front surface of the digital twin of the spectacle lens is defined analogously as in ISO 13666:2019(E), section 3.2.13, as a surface which when said digital twin is transferred to physical reality is intended to be fitted away from the eye. The back surface of the digital twin of the spectacle lens is defined analogously as in ISO 13666:2019(E), section 3.2.14, as a surface which when said digital twin is transferred to physical reality is intended to be fitted nearer to the eye. The digital twin of the spectacle lens is transferred to physical reality by manufacturing said spectacle lens, preferably by additively manufacturing said spectacle lens, more preferably by printing said spectacle lens, most preferably by inkjet printing said spectacle lens. The refractive index of the optical material may be a uniform refractive index or a non-uniform refractive index. The refractive index of the optical material or the refractive indices of the optical materials preferably is/are the refractive index/indices the spectacle lens has/have when the digital twin of the spectacle lens has been transferred to physical reality. The optical material is as defined in ISO 13666:2019(E), section 3.3.1, a transparent material capable of being manufactured into optical components.

The digital twin of the spectacle lens may be, for the purpose of a use of the digital twin for manufacturing the spectacle lens, additionally or alternatively, selected from at least one of the group consisting of:
- analogously as in ISO 13666:2019(E), section 3.5.2 (spectacle lens), a digital twin of an ophthalmic lens (3.5.1) virtually positioned relative to an eye model, or worn, after having been transferred to physical reality, by manufacturing the spectacle lens, in front of, but not in contact with, an eyeball;
- an analytical description or an analytical model describing or representing said spectacle lens. Said analytical description or said analytical model is for the purpose of a use for manufacturing said spectacle lens. Said analytical description or said analytical model preferably is a piecewise representation and comprises (a) a mathematical formula describing a lens surface of a front surface of said spectacle lens, (b) a mathematical formula describing a lens surface of a back surface of said spectacle lens and (c) a mathematical formula describing a refractive index of an optical material or describing refractive indices of optical materials. Said analytical description or said analytical model comprises an orientation between the front surface and the back surface, preferably, in that, that either the front surface and the back surface are described in a same coordinate system, or that a transformation between a coordinate system of the front surface to a coordinate system of the back surface, or vice versa, is known;
- an analytical description or an analytical model describing or representing said spectacle lens, said analytical description or said analytical model additionally containing manufacturing instructions, preferably for additively manufacturing said spectacle lens, more preferably for printing said spectacle lens, in particular for inkjet printing said spectacle lens;
- in the form of an analytical description or an analytical model representing said spectacle lens, said analytical description or said analytical model being for the purpose of a use for manufacturing said spectacle lens;
- in the form of an analytical description or an analytical model representing said spectacle lens, said analytical description or said analytical model additionally containing manufacturing instructions, preferably for additively manufacturing said spectacle lens, more preferably for printing said spectacle lens, in particular for inkjet printing said spectacle lens;
- said analytical description or said analytical model being (i) computer-readable data or (ii) in the form of computer-readable data, said computer-readable data being for the purpose of a use for manufacturing said spectacle lens;
- said analytical description or said analytical model being (i) computer-readable data or (ii) in the form of computer-readable data, said computer-readable data additionally containing manufacturing instructions, preferably for additively manufacturing said spectacle lens, more preferably for printing said spectacle lens, in particular for inkjet printing said spectacle lens;
- said analytical description or said analytical model being for the purpose of a use for manufacturing said spectacle lens and being (i) stored on a computer-readable storage medium, (ii) embodied in a data signal or (iii) transferred via a data signal. The computer readable storage medium may be a non-transitory tangible computer-readable storage medium;
- numerical data describing or representing said spectacle lens. Said numerical data is for the purpose of a use for manufacturing said spectacle lens. Said numerical data preferably is comprising or being a conversion of said analytical description or said analytical model. Said numerical data preferably comprises a) discrete z(x,y) positions of or on a front surface of said spectacle lens and b) discrete z(x,y) positions of or on a back surface of said spectacle lens where the discrete z(x,y) positions are calculated in a pattern of predefined discrete x,y positions. Said pattern comprising discrete z(x,y) positions may be adapted or selected arbitrarily. Preferably, said pattern is adapted or selected to consider a print resolution of an inkjet printer, in particular a print resolution of one or more print head(s) of an inkjet printer. Said numerical data comprises a function value of the analytical description or the analytical model of the front and the back surface in each of said discrete x,y positions. The function value in each discrete x,y position, i.e., the discrete z(x,y) positions, of the front surface and the back surface are in a known orientation to each other, preferably described in a same coordinate system, or a known transformation between a coordinate system of the front surface to a coordinate system of the back surface, or vice versa, is comprised in said numerical data. A refractive index of the optical material or refractive indices of optical materials at predefined discrete x,y,z positions is/are comprised in said numerical data;
- numerical data describing or representing said spectacle lens, said numerical data additionally containing manufacturing instructions, preferably for additively manufacturing said spectacle lens, more preferably for printing said spectacle lens, in particular for inkjet printing said spectacle lens;
- in the form of numerical data describing or representing said spectacle lens, said numerical data being for the purpose of a use for manufacturing said spectacle lens;
- in the form of numerical data describing or representing said spectacle lens, said numerical data additionally containing manufacturing instructions, preferably for additively manufacturing said spectacle lens, more preferably for printing said spectacle lens, in particular for inkjet printing said spectacle lens;
- said numerical data being (i) computer-readable data or (ii) in the form of computer-readable data, said computer-readable data being for the purpose of a use for manufacturing said spectacle lens;
- said numerical data being (i) computer-readable data or (ii) in the form of computer-readable data, said computer-readable data additionally containing manufacturing instructions, preferably for additively manufacturing said spectacle lens, more preferably for printing said spectacle lens, in particular for inkjet printing said spectacle lens;
- said numerical data being for the purpose of a use for manufacturing said spectacle lens and being (i) stored on a computer-readable storage medium, (ii) embodied in a data signal or (iii) transferred via a data signal. The computer-readable storage medium may be a non-transitory tangible computer-readable storage medium;
- computer-readable data describing or representing said spectacle lens, said computer-readable data being for the purpose of a use for manufacturing said spectacle lens;
- computer-readable data describing or representing said spectacle lens, said computer-readable data additionally containing manufacturing instructions, preferably for additively manufacturing said spectacle lens, more preferably for printing said spectacle lens, in particular for inkjet printing said spectacle lens;
- in the form of computer-readable data describing or representing said spectacle lens, said computer-readable data being for the purpose of a use for manufacturing said spectacle lens;
- in the form of computer-readable data describing or representing said spectacle lens, said computer-readable data additionally containing manufacturing instructions, preferably for additively manufacturing said spectacle lens, more preferably for printing said spectacle lens, in particular for inkjet printing said spectacle lens;
- said computer-readable data being for the purpose of a use for manufacturing said spectacle lens and being (i) stored on a computer-readable storage medium, (ii) embodied in a data signal or (iii) transferred via a data signal. The computer-readable storage medium may be a non-transitory tangible computer-readable storage medium;
- a virtual representation of said spectacle lens, said virtual representation being for the purpose of a use for manufacturing said spectacle lens;
- a virtual representation of said spectacle lens in the form of computer-readable data being for the purpose of a use for manufacturing said spectacle lens;
- a virtual representation of said spectacle lens in the form of computer-readable data, said computer-readable data additionally containing manufacturing instructions, preferably for additively manufacturing said spectacle lens, more preferably for printing said spectacle lens, in particular for inkjet printing said spectacle lens;
- said virtual representation of said spectacle lens being for the purpose of a use for manufacturing said spectacle lens and being (i) stored on a computer-readable storage medium, (ii) embodied in a data signal or (iii) transferred via a data signal. The computer-readable storage medium may be a non-transitory tangible computer-readable storage medium;
- said virtual representation of said spectacle lens in the form of computer-readable data being for the purpose of manufacturing said spectacle lens and being (i) stored on a computer-readable storage medium, (ii) embodied in a data signal or (iii) transferred via a data signal. The computer-readable storage medium may be a non-transitory tangible computer-readable storage medium.

A "spectacle lens" results from a transfer of a digital twin of a spectacle lens to physical reality. The digital twin of the spectacle lens is transferred to physical reality by manufacturing the spectacle lens. The spectacle lens is as defined in ISO 13666:2019(E), section 3.5.2, an ophthalmic lens (3.5.1) worn in front of, but not in contact with, the eyeball. A front surface of the spectacle lens is defined as in ISO 13666:2019(E), section 3.2.13, as surface of the spectacle lens intended to be fitted away from the eye. A back surface of the spectacle lens is defined as in ISO 13666:2019(E), section 3.2.14, as surface of the spectacle lens intended to be fitted nearer to the eye.

The spectacle lens preferably is a finished spectacle lens, the finished spectacle lens as defined in ISO 13666:2019(E), section 3.8.7 (finished lens), as lens (3.5.2) of which both sides have their final optical surface. The finished spectacle lens may be either an uncut spectacle lens as defined in ISO 13666:2019(E), section 3.8.8 (uncut lens) or an edged spectacle lens as defined in ISO 13666:2019(E), section 3.8.9 (edged lens). The spectacle lens preferably is selected from at least one of
- a single-vision spectacle lens as defined in ISO 13666:2019(E), section 3.7.1 (single-vision lens),
- a position-specific single-vision spectacle lens as defined in ISO 13666:2019(E), section 3.7.2 (position-specific single-vision lens),
- a multifocal spectacle lens as defined in ISO 13666: 2019(E), section 3.7.3 (multifocal lens),
- a bifocal spectacle lens as defined in ISO 13666:2019(E), section 3.7.4 (bifocal lens),
- a trifocal spectacle lens as defined in ISO 13666:2019(E), section 3.7.5 (trifocal lens),
- a fused multifocal spectacle lens as defined in ISO 13666:2019(E), section 3.7.6 (fused multifocal lens),
- a power-variation spectacle lens as defined in ISO 13666:2019(E), section 3.7.7 (power-variation lens),
- a progressive-power spectacle lens as defined in ISO 13666:2019(E), section 3.7.8 (progressive-power lens).

A "layer stack with individual layers" of a digital twin of a spectacle lens results from slicing the digital twin in individual layers. An individual layer of said layer stack may have a uniform refractive index or a non-uniform refractive index. Preferably, said layer stack comprises up to 400 individual layers, further preferably within a range selected from at least one of the following ranges:
- a range from 50 to 360 individual layers,
- a range from 60 to 320 individual layers,
- a range from 70 to 280 individual layers,
- a range from 80 to 240 individual layers,
- a range from 90 to 200 individual layers,
- a range from 95 to 160 individual layers.

In said layer stack preferably one individual layer is a base layer. When transferring the digital twin of the spectacle lens to physical reality, the base layer is an individual layer being in contact with an optionally removable concave substrate in, or an optionally removable convex substrate on which said base layer is applied to. Said base layer preferably replicates a lens surface of a front surface of the digital twin of the spectacle lens when applied in an optionally removable concave substrate, said base layer preferably replicates a lens surface of a back surface of the digital twin when applied on an optionally removable convex substrate. Said base layer preferably has a uniform layer thickness, a uniform refractive index and a smaller spatial expansion as said optionally removable convex or concave substrate. Preferably, the substrate is removable and removed from a spectacle lens after the digital twin of the spectacle lens has been transferred to physical reality.

A "form" of an interface is defined as a layer surface or a shape or a topography of said interface.

An "interface" in a layer stack results from slicing a digital twin of a spectacle lens in individual layers. An interface separates two individual layers in said layer stack from each other.

A form of an interface of an individual layer is "replicating" a curved lens surface of a digital twin of a spectacle lens if a form of an interface is identical, preferably at least in part, to at least one of a curved lens surface of a front surface of said digital twin and to a curved lens surface of a back surface of said digital twin.

A "curved" lens surface of a digital twin of a spectacle lens is defined analogously as in ISO 13666:2019(E), section 3.6.2 (curved-form lens), as a lens surface being convex in all meridians (3.2.11) or as a lens surface being concave in all meridians. In the context of the present application the curved lens surface preferably refers to the front surface or the back surface, not to an edge surface of the digital twin.

A "lens surface of a digital twin of a spectacle lens" is a mathematical description of the front surface of the digital twin of the spectacle lens or a mathematical description of the back surface of the digital twin of the spectacle lens. The mathematical description of the front surface and the mathematical description of the back surface are piecewise mathematical descriptions. The lens surface of the front surface and the lens surface of the back surface of the digital twin of the spectacle lens preferably are formed as defined in ISO 13666:2019(E), section 3.4 or are formed as analogously defined in ISO 13666:2019(E), section 3.4. The lens surfaces of the front surface and of the back surface of the digital twin of the spectacle lens may be formed as one of the following:
- as a spherical surface as defined in ISO 13666:2019(E), section 3.4.1,
- as a cylindrical surface as defined in ISO 13666:2019(E), section 3.4.2,
- as an aspherical surface as defined in ISO 13666:2019(E), section 3.4.3,
- as a toroidal surface as defined in ISO 13666:2019(E), section 3.4.6,
- as an atoroidal surface as defined in ISO 13666:2019(E), section 3.4.7,
- as a power-variation surface defined analogously as in ISO 13666:2019(E), section 3.4.10.

The lens surface of the front surface and the lens surface of the back surface of the digital twin of the spectacle lens may be formed of a same lens surface or of a different lens surface, preferably in each case selected from one lens surface of the before mentioned.

A "lens surface of a spectacle lens" results from a transfer of the lens surface of the digital twin of the spectacle lens to physical reality, by manufacturing the spectacle lens. The lens surface of the front surface and the lens surface of the back surface of the spectacle lens preferably are formed as defined in ISO 13666:2019(E), section 3.4. The lens surfaces of the front surface and of the back surface of the spectacle lens may be formed as one of the following:
- as a spherical surface as defined in ISO 13666:2019(E), section 3.4.1,
- as a cylindrical surface as defined in ISO 13666:2019(E), section 3.4.2,
- as an aspherical surface as defined in ISO 13666:2019(E), section 3.4.3,
- as a toroidal surface as defined in ISO 13666:2019(E), section 3.4.6,
- as an atoroidal surface as defined in ISO 13666:2019(E), section 3.4.7,
- as a power-variation surface as defined in ISO 13666:2019(E), section 3.4.10.

The lens surface of the front surface and the lens surface of the back surface of the spectacle lens may be formed of a same lens surface or of a different lens surface, preferably in each case selected from one lens surface of the before mentioned.

A "discrete x,y,z position" or "discrete x,y,z positions" of a digital twin of a spectacle lens are defined in a x,y,z coordinated system which is defined as follows:
A predefined point of the digital twin of the spectacle lens defines an origin of an x,y,z coordinate system and a surface normal or a primary direction at said predefined point defines a "z direction". An "x,y direction" is in a plane perpendicular to said surface normal or said primary direction. In said plane perpendicular to said surface normal or said primary direction the x direction and the y direction are perpendicular to each other. Said predefined point preferably is selected from the group consisting of a fitting point and an optical centre. The fitting point of the digital twin of the spectacle lens is defined analogously as in ISO 13666:2019(E), section 3.2.34, a point on the front surface (3.2.13) of the respective digital twin of the spectacle lens stipulated for virtual positioning the respective digital twin relative to an eye model. The primary direction of the digital twin of the spectacle lens is defined analogously as in ISO 13666:2019(E), section 3.2.25, as direction of a virtually represented line of sight, usually taken to be the horizontal, to an object at an infinite distance when assumed looking straight ahead in unaided vision. The optical centre of the digital twin of the spectacle lens is defined analogously as in ISO 13666:2019(E), section 3.2.15, as intersection of an optical axis (3.1.8) with the front surface (3.2.13) of the respective digital twin of the spectacle lens.

Alternatively, a surface normal at either an apex of the front surface of the digital twin of the spectacle lens or an apex of the back surface of the digital twin of the spectacle lens shall define an origin of an x,y,z coordinate system and a z direction. A x,y direction shall be in a tangential plane to either said front surface at the apex or said back surface at the apex. A x direction and a y direction shall be perpendicular to each other in said tangential plane. The fitting point of the digital twin of the spectacle lens is for example the origin of an x,y,z coordinate system in case the front surface or the back surface of the digital twin of a spectacle lens is a power-variation surface or another surface without an unambiguously definably apex.

In contrast to WO 2021/209551 A1, figure 1, suggesting a two-dimensional slicing of a three-dimensional optical component in which each slice is parallel to a flat substrate, the method according to claim 1 proposes a curved slicing of a digital twin of a spectacle lens in which a form of an interface of an individual layer is over the whole spatial expansion of said individual layer, irrespective of whether said individual layer is a continuous or a non-continuous individual layer, identical to at least a part of a curved lens surface of a front surface and/or at least a part of a curved lens surface of a back surface. In contrast to WO 2021/209551 A1, figure 1, the layer stack of the digital twin of the spectacle lens is not calculated that a form of an interface of an individual layer follows a flat lens surface but that a form of an interface of an individual layer follows a curved lens surface. Comparing a layer stack of a digital twin of a spectacle lens that has been flatly sliced with a layer stack of the identical digital twin that has been curvedly sliced, the respective layer stacks distinguish in a number of individual layers in that the curvedly sliced layer stack comprises fewer individual layers. As a consequence, the in WO 2021/209551 A1, page 1, lines 26 to 28, described and in WO 2021/209551 A1, figure 2 shown superelevations occurring at edges of an individual layer due to a surface tension of a printing ink, and in particular an adding of such superelevations is minimized. Determining the layer stack of the digital twin such that the form of an interface replicates at least partially a curved lens surface of a front surface and/or at least partially a curved lens surface of a back surface of the digital twin allows a smart design of the layer stack reducing the number of steps needed and shown in WO 2021/209551 A1, figure 1, thus in turn reducing or minimizing the adding of superelevations. From a process view, printing, in particular inkjet printing, individual layers of a spectacle lens according to a flatly sliced layer stack into a mould with a curved surface implies a different spatial expansion of each subsequently printed individual layer. Thus, each individual layer is in contact with an already printed individual layer and a different part of a mould surface. The adhesion differs significantly from a part where each layer is in contact with a preceding flat layer and a part, where direct contact with the mould is required. This variation of the quality of contact surfaces is difficult to control in respect to an ability to separate a resulting spectacle lens from a curved mould surface. In contrast thereto, when printing, in particular inkjet printing, individual layers of a spectacle lens according to a curved sliced layer stack into a mould with a curved surface, a release control is much easier as an adhesion is usually observed at the full interface between mould and base layer, said base layer having a full spatial expansion of the spectacle lens. The adhesion of the subsequent layers can be controlled much easier, as the contact surfaces of each individual layer are always optical material, preferably polymer, to optical material and not optical material to mould. At optical material interfaces a chemical bonding of functional groups of a preceding to functional groups of a subsequent individual layer can form, which enhances overall cohesion of the spectacle lens. Furthermore, from a process view, printing, in particular inkjet printing, individual layers of a spectacle lens according to a flatly sliced layer stack into a mould with a curved surface results also with respect to a surface of a resulting spectacle lens not having been in contact with a respective curved surface of the mould but also with respect to the other surface of the spectacle lens having been in contact with a respective curved surface of the mould in unavoidable superelevations of each individual layer which, without post treatment, such as cutting, milling, polishing, are visible in the spectacle lens. In contrast thereto, from a process view, printing, in particular inkjet printing, individual layers of a spectacle lens according to a curved sliced layer stack into a mould with a curved surface avoids via a smart arrangement of individual layer edges an adding up of superelevations at least of the lens surface of the spectacle lens having been in contact with the mould.

Therefore, the problem is fully solved by the method according to claim 1. The method described in WO 2021/209551 A1 may be applied additionally to the method according to claim 1.

The method being configured for calculating by a computer the digital twin of the spectacle lens for the purpose of the use of the digital twin for the manufacture of the spectacle lens, said digital twin of the spectacle lens comprising the layer stack with the individual layers, is preferably characterized in the step of
- replicating said curved lens surface such that said form of said interface is one form selected from the following group of forms
   ∘ a form of a front surface,
   ∘ a form of a back surface,
   ∘ pieced up parts of a front surface,
   ∘ pieced up parts of a back surface,

∘ pieced up parts of a front surface and a back surface.

In case an individual layer of a layer stack of the digital twin of the spectacle lens is having one interface, i.e., in case the individual layer is defined by i) the front surface and a closest interface or ii) the back surface and a closest interface, a form of said one interface, i.e., a form of said closest interface, is, preferably at least in part, replicating at least one of the curved lens surface of the front surface and the curved lens surface of the back surface of the digital twin. In the presence of the before mentioned base layer which is assumed to replicate the curved lens surface of the front surface or of the back surface the individual layer having one interface is defined by iii) the interface of the base layer next to the front surface and a closest interface or iv) the interface of the base layer next to the back surface and a closest interface. In case the individual layer of the layer stack of the digital twin of the spectacle lens is having one interface, a form of said one interface may also replicate a curved lens surface according to any one of the variants described in the following with respect to two closest interfaces.

In case an individual layer of a layer stack of the digital twin of the spectacle lens is having two interfaces, i.e., in case the individual layer is defined by two closest interfaces, a form of each of the two closest interfaces preferably replicates a curved lens surface according to any one of the following variants:
In case an individual layer of a layer stack of the digital twin of the spectacle lens is having two closest interfaces, a form of each of the two closest interfaces may either replicate the curved lens surface of the front surface or the curved lens surface of the back surface of the digital twin. In the aforementioned case a first plurality of the individual layers may replicate the curved lens surface of the front surface and a second plurality of the individual layers may replicate the curved lens surface of the back surface. The layer stack may comprise i) individual layers of the first plurality and individual layers of the second plurality arranged alternately, ii) one individual layer of the first plurality followed by more or all individual layers of the second plurality, iii) one individual layer of the second plurality followed by more or all individual layers of the first plurality, iv) more or all individual layers of the first plurality followed by one or more individual layers of the second plurality, v) more or all individual layers of the first plurality followed by all individual layers of the second plurality, vi) more or all individual layers of the second plurality followed by one or more individual layers of the first plurality, or vii) more or all individual layers of the second plurality followed by all individual layers of the first plurality. The layer stack comprising individual layers arranged alternately preferably means that the respective individual layers are next to each other, but not necessarily adjacent to each other. The layer stack comprising more individual layers of the first plurality followed by more individual layers of the second plurality or vice versa preferably means that the respective more individual layers are next, not necessarily but preferably adjacent to each other. Further, the layer stack comprising more individual layers of the first plurality followed by more individual layers of the second plurality or vice versa preferably means that the respective pluralities are arranged alternately. For example, the layer stack accordingly comprises more individual layers of the first plurality, followed by more individual layers of the second plurality, followed by more individual layers of the first plurality, and as the case may be followed by more individual layers of the second plurality and so on, the individual layers of the respective plurality preferably being next, further preferably being adjacent to each other. The layer stack comprising more individual layers of the first plurality followed by all individual layers of the second plurality or vice versa preferably means the respective more individual layers and the respective all individual layers are next, not necessarily but preferably adjacent to each other. Further, the layer stack comprising more individual layers of the first plurality followed by all individual layers of the second plurality or vice versa preferably means that the more individual layers of the respective plurality are embedding all individual layers of the respective other plurality. For example, the layer stack comprises accordingly more individual layer of the first plurality, followed by all individual layers of the second plurality, followed by more individual layers of the first plurality, the individual layers of the respective plurality preferably being next, further preferably being adjacent to each other. A smart arrangement of individual layers in the layer stack depends on the digital twin of the spectacle lens, thereby preferably considering an avoidance of steps, for example, by avoiding an addition of superelevations of edges of individual layers, for example, by distributing or equally distributing a spatial expansion and thus edges of individual layers throughout the layer stack.

Alternatively, in case an individual layer of a layer stack of the digital twin of the spectacle lens is having two interfaces, the form of one interface may replicate the curved lens surface of the front surface and the form of the other one may replicate the curved lens surface of the back surface of the digital twin. However, a lens surface or a curvature of the curved lens surface of the front surface and the curved lens surface of the back surface of the digital twin may be very different. For this reason, it may be difficult to obtain a printable individual layer whose form of one interface is replicating the curved lens surface of the front surface and whose form of the other interface is replicating the curved lens surface of the back surface. A solution to this may be that a form of these interfaces replicates a part of the curved lens surface of the front surface and a part of the curved lens surface of the back surface such that a printable individual layer results. A form of an interface is replicating "a part" of the curved lens surface of the front surface or the back surface when a not replicated part of the respective curved lens surface preferably is cut off. The form of one interface may replicate discrete x,y positions of the front surface and the form of the other interface may replicate corresponding discrete x,y positions of the back surface. When projected in a plane spanned by a x,y direction, the corresponding discrete x,y positions of the back surface are different to the discrete x,y positions of the front surface in the z position only. Phrased differently, in a layer stack the form of one interface of the individual layer is replicating a part of the front surface and the form of the other interface is replicating a parallel part of the back surface. A discrete x,y,z position of an interface is "corresponding" to a discrete x,y,z position of a curved lens surface of a front surface or a back surface if, for example in plan view, in a plane spanned by a x,y direction, the respective discrete x,y positions are identical. The respective discrete z positions are not identical. Alternatively, the form of one interface may replicate discrete x,y positions of the front surface and the form of the other interface may replicate x,y positions of the back surface which are shifted with respect to the discrete x,y positions of the front surface. Shifted discrete x,y positions differ in their respective discrete x,y,z positions, for example, in plan view when projected in a plane spanned by a x,y direction. Phrased differently, in a layer stack the form of one interface of the individual layer is replicating a part of the front surface and the form of the other interface of the individual layer is replicating a not parallel part of the back surface. Individual layers whose respective form of one interface is replicating the curved lens surface of the front surface and whose respective form of the other interface is replicating the curved lens surface of the back surface may be embedded in the layer stack. Such an embedding might be useful for example when a transition between a plurality of individual layers whose forms of both interfaces are replicating a same curved lens surface of the digital twin is needed. Thereby a spatial expansion of the individual layers whose forms of the interfaces are replicating different curved lens surfaces may vary, for example increase or decrease. When, for example, those individual layers are embedded in a layer stack between an individual layer A whose form of the interfaces is replicating the curved lens surface of the front surface and an individual layer B whose form of the interface is replicating the curved lens surface of the back surface, a smooth transition between the individual layers A and B is ensured.

In case a layer stack of the digital twin of the spectacle lens comprising individual layers is projected into a plane spanned by a x,y direction and then a projection of an individual layer is not having an identical spatial expansion as a projection of a front surface of said digital twin in said plane or as a projection of a back surface of said digital twin in said plane a form of an interface is replicating a part of a curved lens surface of a front surface or a part of a curved lens surface of a back surface. Preferably, the form of the curved lens surface of the front surface or of the back surface is replicated cut off, preferably neither compressed nor stretched. Therefore, a projection of an individual layer "not having an identical spatial expansion" as a projection of a front or back surface preferably means that the projection of the individual layer is having a smaller spatial expansion than the projection of the front surface or the back surface. As mentioned before, the projection of the individual layer and the projection of the front or back surface preferably is into the same plane spanned by the x,y direction. In a continuous individual layer of a layer stack, i.e., in an individual layer extending without interruptions, a form of an interface is replicating a part of a curved lens surface of a front surface or a part of a curved lens surface of a back surface when a peripheral part of the curved lens surface of the front surface or a peripheral part of the curved lens surface of the back surface is not replicated. A "peripheral part" of the curved lens surface of the front surface or of the back surface is a part of the respective lens surface which, for example in plan view, is away from at least one of an optical centre, and a fitting point of the digital twin of the spectacle lens. The peripheral part of the respective curved lens surface, for example in plan view, preferably is not including the optical centre or the fitting point.

The "optical centre" of a digital twin of a spectacle lens is defined analogously as in

ISO 13666:2019(E), 3.2.15, as virtual intersection of an optical axis with a front surface of the digital twin of the spectacle lens. The "fitting point" of a digital twin of a spectacle lens is defined analogously as in ISO 13666:2019(E), 3.2.34, as a point on a front surface of the digital twin of the spectacle lens or a digital twin of a blank stipulated by the manufacturer for virtually positioning the digital twin of the spectacle lens in front of an eye. In a continuous individual layer, the form of the interface preferably is replicating a part of the curved lens surface of the front surface or of the curved lens surface of the back surface when 25% to 75% of the respective curved lens surface is replicated. In the layer stack of the digital twin of the spectacle lens, preferably the form of
- one interface of the continuous individual layer is replicating the curved lens surface of the front surface or of the back surface such that each replicated discrete x,y position of said interface is identical to a corresponding discrete x,y position of the respective replicated curved lens surface. The one interface and the curved lens surface of either the front surface or the back surface thus are different from each other in the respective discrete z positions only. Phrased differently, the one interface whose form is identical at least in part to the form of the curved lens surface of either the front surface or the back surface is positioned in the layer stack of the digital twin in parallel to the respective replicated part of the curved lens surface. The continuous individual layer having one interface shall be defined by i) the front surface and a closest interface being the one interface or ii) the back surface and a closest interface being the one interface. In the presence of a base layer, the before given definition with respect to said one interface shall apply accordingly;
- both interfaces of the continuous individual layer are replicating the curved lens surface of the front surface or of the back surface such that each replicated discrete x,y position of each interface is identical to a corresponding discrete x,y position of the respective replicated curved lens surface. Both interfaces of the continuous individual layer as well as the respective replicated curved lens surface thus are different from each other in the respective discrete z positions only. Phrased differently, both interfaces whose form is identical at least in part to the form of the curved lens surface of either the front surface or the back surface are positioned in the layer stack of the digital twin in parallel to the respective replicated part of the curved lens surface. The continuous individual layer having two interfaces shall be defined by two closest interfaces;
- one interface of the continuous individual layer is replicating the curved lens surface of the front surface and the other interface is replicating the curved lens surface of the back surface or vice versa such that each replicated discrete x,y position of each interface is identical to a corresponding discrete x,y position of the respective replicated curved lens surface. The interfaces of the continuous individual layer and the respective replicated curved lens surface are different from each other in the respective discrete z positions only. Phrased differently, the interface whose form is identical at least in part to the form of the curved lens surface of the front surface is positioned in the layer stack of the digital twin in parallel to the replicated part thereof and the interface whose form is identical at least in part to the form of the curved lens surface of the back surface is positioned in said layer stack in parallel to the replicated part thereof. The continuous individual layer having two interfaces shall be defined by two closest interfaces.

In the layer stack of the digital twin of the spectacle lens, alternatively or additionally to the before described, the definitions of the continuous individual layer shall apply accordingly, the form of
- one interface of the continuous individual layer is replicating the curved lens surface of the front surface or of the back surface such that each replicated discrete x,y position of said interface is not identical to a corresponding discrete x,y position of the respective replicated curved lens surface. The one interface and the curved lens surface of either the front surface or the back surface thus are different from each other in the respective discrete x,y,z positions. Phrased differently, the one interface whose form is identical at least in part to the form of the curved lens surface of either the front surface or the back surface is positioned in the layer stack of the digital twin not in parallel but shifted to the respective replicated part of the curved lens surface;
- both interfaces of the continuous individual layer are replicating the curved lens surface of the front surface or of the back surface such that each replicated discrete x,y position of each interface is not identical to a corresponding discrete x,y position of the respective replicated curved lens surface. Both interfaces of the continuous individual layer as well as the respective replicated curved lens surface thus are different from each other in the respective discrete x,y,z positions. Phrased differently, both interfaces whose form is identical at least in part to the form of the curved lens surface of either the front surface or the back surface are positioned in the layer stack of the digital twin not in parallel but shifted to the respective replicated part of the curved lens surface;
- one interface of the continuous individual layer is replicating the curved lens surface of the front surface and the other interface is replicating the curved lens surface of the back surface or vice versa such that each replicated discrete x,y position of each interface is not identical to a corresponding discrete x,y position of the respective replicated curved lens surface. The interfaces of the continuous individual layer and the respective replicated curved lens surface are different from each other in the respective discrete x,y,z positions. Phrased differently, the interface whose form is identical at least in part to the form of the curved lens surface of the front surface is positioned in the layer stack of the digital twin not in parallel but shifted to the replicated part thereof and the interface whose form is identical at least in part to the form of the curved lens surface of the back surface is positioned in said layer stack not in parallel but shifted to the replicated part thereof;
- one interface of the continuous individual layer is replicating the curved lens surface of the front surface such that each replicated discrete x,y position is identical to a corresponding discrete x,y position of the front surface and the other interface is replicating the curved lens surface of the back surface such that each replicated discrete x,y position is not identical to a corresponding discrete x,y position of the back surface or vice versa. Phased differently, the interface whose form is identical at least in part to the form of the curved lens surface of the front surface is positioned in the layer stack

in parallel to the replicated part thereof and the interface whose form is identical at least in part to the form of the curved lens surface of the back surface is position in said layer stack not in parallel but shifted to the replicated part thereof.

If the position of the interface whose form is replicating at least a part of a curved lens surface is in parallel to a replicated part of the curved lens surface or shifted with respect to the replicated part of the curved lens surface preferably depends on the digital twin of the spectacle lens.

With respect to at least one of the group consisting of the optical centre and the fitting point, the form of the interface may replicate, preferably at least in part, at least one of the curved lens surface of the front surface and the curved lens surface of the back surface of the digital twin either symmetrically or asymmetrically. Preferably in a projection of the layer stack of the digital twin into the plane spanned by the x,y direction "replicating a curved lens surface symmetrically" preferably means that starting from at least one selected from the group consisting of the optical centre and the fitting point, a form of an interface is replicating, preferably at least in part, a curved lens surface of at least one of a front surface and a curved lens surface of a back surface such as to have in each direction in said plane an identical distance to the optical centre or to the fitting point. Depending on whether the respective replicated curved lens surface comprises the optical centre or the fitting point, or not, the distance to the optical centre, or the distance to the fitting point, includes an end point of the interface for each direction or a starting point and an end point of the interface for each direction. The starting point preferably is next to the optical centre or the fitting point where an interface begins. The end point preferably is away from the optical centre or the fitting point where an interface ends. Preferably in a projection of the layer stack of the digital twin into a plane spanned by a x,y direction "replicating a curved lens surface asymmetrically" preferably means that starting from at least one of the group consisting of the optical centre and the fitting point, a form of an interface is replicating, preferably at least in part, at least one of a curved lens surface of a front surface and a curved lens surface of a back surface such as to have in different directions in said plane different distances to the optical centre or to the fitting point. Accordingly, with respect to the optical centre or the fitting point, the form of the interface may replicate the peripheral part of the respective curved lens surface symmetrically or asymmetrically.

In a non-continuous individual layer, i.e., in an individual layer extending with interruptions, a form of an interface is replicating a part of at least one of a curved lens surface of a front surface and a part of a curved lens surface of a back surface, the part being selected from at least one of
a) a peripheral part of the curved lens surface of the front surface,
b) a peripheral part of the curved lens surface of the back surface,
c) a central part of the curved lens surface of the front surface,
d) a central part of the curved lens surface of the back surface,
e) at least one part between the peripheral part and the central part of the curved lens surface of the front surface,
f) at least one part between the peripheral part and the central part of the curved lens surface of the back surface.

A "central part" of the respective curved lens surface is a part near or next to at least one of the group selected from the optical centre and the fitting point of the digital twin of the spectacle lens, preferably including the optical centre or the fitting point. With respect to the optical centre or the fitting point, the form of the interface may replicate the central part of the respective curved lens surface of the digital twin symmetrically or asymmetrically. Preferably, in a projection of the layer stack of the digital twin into a plane spanned by a x,y direction "replicating a central part of a curved lens surface symmetrically" preferably means that starting from at least one of the optical centre and the fitting point, a form of an interface is replicating at least one of a central part of a curved lens surface of a front surface and a central part of a curved lens surface of a back surface such as to have in each direction in said plane an identical distance to the optical centre or to the fitting point. In case the central part of the respective curved lens surface comprises the optical centre or the fitting point, the respective distance refers in each direction in said plane to a distance between the optical centre and an end point of the interface or between the fitting point and an end point of the interface. In case the central part of the respective curved lens surface does neither comprise the optical centre nor the fitting point the distance includes in each direction in said plane to i) a first distance between the optical centre and a starting point of the interface and ii) a second distance between the optical centre and an end point of the interface; or iii) a first distance between the fitting point and a starting point of the interface and iv) a second distance between the fitting point and an end point of the interface. Preferably, in a projection of the layer stack of the digital twin into a plane spanned by a x,y direction "replicating a central part of a curved lens surface asymmetrically" preferably means that starting from at least one of the group selected form the optical centre and the fitting point, a form of an interface is replicating at least one of a central part of a curved lens surface of a front surface and a central part of curved lens surface of a back surface such as to have in different directions in said plane different distances to the optical centre or to the fitting point. Depending on whether the optical centre or the fitting point is comprised in the replicated central part of the respective curved lens surface or not the different distances in different directions preferably refer to either different distances between the optical center and end points of an interface in different directions or between the fitting point and end points of an interface in different directions, or to different distances between respective starting points and end points of an interface in different directions.

With respect to a form of an interface replicating a part between a peripheral part and a central part of at least one of a front surface and a back surface symmetrically or asymmetrically what was said in the previous paragraphs with respect to symmetrically or asymmetrically shall apply by analogy. Preferably, the form of an interface is replicating a continuous part of the curved lens surface, i.e., a) the form of the interface is not piecing together different replicated parts of the same curved lens surface or b) the form of the interface is not omitting one or more parts of the curved lens surface and piecing together remaining replicated parts of the same curved lens surface.

Alternatively or additionally, a form of an interface of an individual layer is "replicating" a curved lens surface of a digital twin of a spectacle lens if a form of a same interface is identical to different parts of a same curved lens surface. In this context, alternatively preferably means that in a layer stack of a digital twin of a spectacle lens a) a form of an interface of an individual layer is replicating a same curved lens surface, i.e., either the curved lens surface of a front surface or the curved lens surface of a back surface, or b) a form of same interface is replicating different parts of a same curved lens surface, i.e., different parts of the curved lens surface of a front surface or different parts of the curved lens surface of a back surface. Further, in this context, additionally preferably means that in a layer stack of a digital twin of a spectacle lens, a form of an interface of an individual layer is replicating a same curved lens surface and a form of another interface of the same individual layer or of another individual layer is replicating different parts of a same curved lens surface. The replication of the same curved lens surface may be a replication of the curved lens surface of the front surface or a replication of the curved lens surface of the back surface. The replication of different parts of the same curved lens surface may be a replication of the curved lens surface of the front surface or a replication of the curved lens surface of the back surface. Both before mentioned replications may be replications of the same curved lens surface, i.e., of the curved lens surface of the front surface or of the back surface, or may be replications of different curved lens surfaces, i.e., the replication of the same curved lens surface may be a replication of the curved lens surface of the front surface and the replication of different parts of the same curved lens surface may be a replication of the curved lens surface of the back surface or vice versa. The replication of different parts of the same curved lens surface preferably means that the form of an interface is replicating a non-continuous part of the same curved lens surface, i.e., the form of the interface is piecing together different replicated parts of the curved lens surface of the front surface or piecing together different replicated parts of the curved lens surface of the back surface. One part or more parts of the curved lens surface of the front surface or one part or more parts of the curved lens surface of the back surface are omitted and the remaining parts of the respective curved lens surface are replicated and pieced together resulting in the form of the same interface. An individual layer of which a form of at least one interface replicates different parts of a same curved lens surface may be designed as continuous or as non-continuous individual layer in a layer stack of a digital twin of a spectacle lens. As explained before, a position of an interface may be in parallel or shifted with respect to a replicated part of the curved lens surface whereby the position preferably depends on the digital twin of the spectacle lens.

Alternatively or additionally, a form of an interface of an individual layer is "replicating" a curved lens surface of a digital twin of a spectacle lens if a form of a same interface is partially identical to a curved lens surface of a front surface of said digital twin and partially identical to a curved lens surface of a back surface of a said digital twin. In this context, alternatively preferably means that in a layer stack of a digital twin of a spectacle lens a) a form of an interface of an individual layer is replicating a same curved lens surface, b) a form of a same interface of an individual layer is replicating different parts of a same curved lens surface, or c) a form of a same interface is partially replicating the curved lens surface of a front surface and partially replicating the curved lens surface of a back surface. Further, in this context, additionally preferably means that in a layer stack of a digital twin of a spectacle lens a form of an interface of an individual layer is replicating a same curved lens surface, i.e., the form of the interface is replicating the curved lens surface of the front surface or the curved lens surface of the back surface as described before, and a form of another interface of the same individual layer or a form of another individual layer is partially replicating the curved lens surface of the front surface and partially replicating the curved lens surface of the back surface. Further, in this context, additionally preferably means that in a layer stack of a digital twin of a spectacle lens a form of an interface of an individual layer is replicating different parts of a same curved lens surface, i.e., the form of the interface is replicating pieced together parts of the curved lens surface of the front surface or the curved lens surface of the back surface as described before, and a form of another interface of the same individual layer or a form of another individual layer is partially replicating the curved lens surface of the front surface and partially replicating the curved lens surface of the back surface. Further, in this context, additionally preferably means that in a layer stack of a digital twin of a spectacle lens a form of an interface of an individual layer is replicating a same curved lens surface and a form of an interface of a same individual layer is replicating
- either different parts of a same curved lens surface or
- is partially replicating the curved lens surface of the front surface and partially replicating the curved lens surface of the back surface,
   or a form of an interface of another individual layer is replicating
- either different parts of a same curved lens surface or
- is partially replicating the curved lens surface of the front surface and partially replicating the curved lens surface of the back surface.

Again, replicating a same curved lens surface and replicating different parts of a same curved lens surface does not necessarily mean that in both cases the curved lens surface of the front surface or the curved lens surface of the back surface is replicated. It is only meant that for replicating a same curved lens surface either the curved lens surface of the front surface or the curved lens of the back surface is replicated, and that for replicating different parts of a same curved lens surface either the curved lens surface of the front surface or the curved lens surface of the back surface is replicated. The partial replication of the curved lens surface of the front surface and the partial replication of the curved lens surface of the back surface preferably means that the form of an interface is piecing together a) one replicated part or more replicated parts of the curved lens surface of the front surface and b) one replicated part or more replicated parts of the curved lens surface of the back surface. Piecing together more replicated parts of a same curved lens surface includes omitting a replication of one part or more part(s) of said same curved lens surface and piecing together remaining replicated at least two parts of said same curved lens surface. An individual layer of which a form of at least one same interface replicates one or more part(s) of a curved lens surface of a front surface and one or more part(s) of a curved lens surface of a back surface may be designed as continuous or as non-continuous individual layer in a layer stack of a digital twin of a spectacle lens. Again, as explained before, a position of an interface may be in parallel or shifted with respect to a replicated part of the curved lens surface whereby the position preferably depends on the digital twin of the spectacle lens.

The method being configured for calculating by a computer the digital twin of the spectacle lens for the purpose of the use of the digital twin for the manufacture of the spectacle lens, said digital twin of the spectacle lens comprising the layer stack with the individual layers, is preferably characterized in the step of
- determining said layer stack such that a plurality of individual layers is having a uniform layer thickness.

A "uniform layer thickness" of an individual layer in a layer stack of a digital twin of a spectacle lens preferably is defined as a constant distance between at least one of the group selected from
- two closest interfaces defining said individual layer,
- a front surface and a closest interface defining said individual layer,
- a back surface and a closest interface defining said individual layer.

A distance is constant preferably if at least one of the following conditions applies:
- perpendicular to a tangential plane in each discrete x,y position of an interface each respective discrete x,y position of a closest interface is in a same distance,
- perpendicular to a tangential plane in each discrete x,y position of a front surface each respective discrete x,y position of a closest interface is in a same distance,
- perpendicular to a tangential plane in each discrete x,y position of a back surface each respective discrete x,y position of a closest interface is in a same distance.

A "respective discrete x,y position of a closest interface" is, preferably in a projection of the layer stack of the digital twin in a plane spanned by a x,y direction, a discrete x,y position of the closest interface that differs from the x,y position of the interface, the front surface, or the back surface, as the individual layer is defined, in the z position only.

A plurality of individual layers having a uniform layer thickness preferably means that within said plurality one individual layer or more individual layer is/are having a uniform layer thickness. A plurality of individual layers having a uniform layer thickness preferably does not mean that within said plurality each individual layer is having a uniform layer thickness or even is having a same uniform layer thickness.

For an individual layer defined by two closest interfaces to have a constant layer thickness, a form of the two closest interfaces preferably replicates a same curved lens surface or a same part of a curved lens surface. Each form of the two closest interfaces preferably replicates, as described before, at least one of
- the curved lens surface of the front surface of the digital twin, a continuous part or a pieced together part thereof,
- the curved lens surface of the back surface of the digital twin, a continuous part or a pieced together part thereof,
- a part of the curved lens surface of the front surface and a part of the curved lens surface of the back surface of the digital twin.

For an individual layer defined by the curved lens surface of the front surface and the closest interface to have a constant layer thickness, a form of the closest interface preferably replicates the curved lens surface of the front surface.

For an individual layer defined by the curved lens surface of the back surface and the closest interface to have a constant layer thickness, a form of the closest interface preferably replicates the curved lens surface of the back surface.

Regardless of how the individual layer is defined, the individual layer having a uniform layer thickness may be a continuous individual layer or a non-continuous individual layer.

Slicing a digital twin of a spectacle lens in that a form of an interface replicates at least a part of a curved lens surface of a front surface and/or at least a part of a curved lens surface of a back surface, the form of two closest interfaces preferably being same in any one of the variants described before, has the decisive advantage that a resulting layer stack, as a matter of course depending of the digital twin, may have less individual layers compared to slicing the identical digital twin in that a form of each interface is a straight. This alone leads to less superelevations generally occurring at edges when printing or inkjet printing an individual layer due to a surface tension of a printing ink. From a process view printing or inkjet printing an individual layer with a uniform layer thickness usually is less complex than printing or inkjet printing an individual layer with a non-uniform layer thickness. Furthermore, curved slicing allows via a spatial expansion of an individual layer and a smart arrangement of individual layers, either continuous or non-continuous, with a different spatial expansion in the layer stack, as possible depending on the digital twin of the spectacle lens, a smart positioning of edges of the individual layers, thereby minimizing or reducing an adding of superelevations.

The method being configured for calculating by a computer the digital twin of the spectacle lens for the purpose of the use of the digital twin for the manufacture of the spectacle lens, said digital twin of the spectacle lens comprising the layer stack with the individual layers, is preferably characterized in the step of
- determining said layer stack such that a plurality of individual layers is having a same uniform layer thickness.

The plurality of individual layers having a same uniform layer thickness preferably includes that with respect to an individual layer of said plurality defined by two closest interfaces the two closest interfaces are having a same form by replicating at least partially a curved lens surface of a front surface and/or at least partially a curved lens surface of a back surface, preferably a same form according to any of the variants described before. The plurality of individual layers having a same uniform layer thickness does not necessarily include that with respect to an individual layer of said plurality defined by two closest interfaces, two closest interfaces of an individual layer are having a same form as two closest interfaces of another individual layer.

In case the plurality of individual layers having a uniform layer thickness comprises an individual layer defined by a curved lens surface of a front surface and a closest interface, a form of the closest interface preferably replicates the curved lens surface of the front surface. In case the plurality of individual layers having a uniform layer thickness comprises an individual layer defined by a curved lens surface of a back surface and a closest interface, a form of the closest interface preferably replicates the curved lens surface of the back surface.

A layer stack of a digital twin of a spectacle lens may comprise one individual layer having a uniform layer thickness which is different to the uniform layer thickness of the plurality of individual layers which is the same for each individual layer thereof. The layer stack of the digital twin may comprise one individual layer having a uniform layer thickness which is same as the uniform layer thickness of the plurality of individual layers but a form of two closest interfaces defining the one individual layer is different to a form of two closest interfaces defining an individual layer of the plurality of individual layers.

A layer stack of a digital twin of a spectacle lens may comprise more individual layers each having a uniform layer thickness which is different to the uniform layer thickness of the plurality of individual layers which is the same for each individual layer thereof. Among the more individual layers having a uniform layer thickness i) the uniform layer thickness of each individual layer may be same or different from each other, ii) the uniform layer thickness of some individual layers may be same and of some individual layers different from each other, or iii) the uniform layer thickness of one individual layer may be different to the uniform layer thicknesses of the rest of the more individual layers. The layer stack of the digital twin may comprise more individual layers having a uniform layer thickness which is same as the uniform layer thickness of the plurality of individual layer but a form of two closest interfaces defining some or each of the more individual layers is different to a form of two closest interfaces defining an individual layer of the plurality of individual layers.

Irrespective of whether the uniform layer thickness of the one individual layer or the more individual layers being same as or different to the uniform layer thickness of the plurality of individual layers, a form of two closest interfaces defining the one individual layer or each of the more individual layers preferably is different to forms of two closest interfaces defining an individual layer of the plurality of individual layers. In case the one individual layer or an individual layer of the more individual layers is defined by a front surface and a closest interface, a form of the closest interface replicating the curved lens surface of the front surface may be same as or different to forms of two closest interfaces defining an individual layer of the plurality of individual layers. In case the one individual layer or an individual layer of the more individual layers is defined by a back surface and a closest interface, a form of the closest interface replicating the curved lens surface of the back surface may be same as different to forms of two closest interfaces defining an individual layer of the plurality of individual layers.

In the plurality of individual layers having a same uniform layer thickness an individual layer may be formed as continuous individual layer or as non-continuous individual layer. The one individual layer having a uniform layer thickness may be formed as continuous individual layer or as non-continuous individual layer. In the more individual layers having a uniform layer thickness an individual layer may be formed as continuous individual layer or as non-continuous individual layer.

In the layer stack comprising said plurality of individual layers having the same uniform layer thickness, and at least one of said one individual layer having the uniform layer thickness and said more individual layers having the uniform layer thickness, the individual layers may be arranged
- such that said plurality of individual layers having the same uniform layer thickness are adjacent to each other and the one individual layer having the uniform layer thickness is either next to a front surface or next to a back surface of a digital twin;
- such that said plurality of individual layers having the same uniform layer thickness are adjacent to each other, the one individual layer having the uniform layer thickness is either next to a front surface or next to a back surface of a digital twin and the more individual layers having the uniform layer thickness are either next to the back surface or next to the front surface of the digital twin;
- such that said plurality of individual layers having the same uniform layer thickness are adjacent to each other, the one individual layer having the uniform layer thickness is either next to a front surface or next to a back surface, a part of the more individual layers having the uniform layer thickness is next to the front surface and a part thereof is next to the back surface of the digital twin;
- such that said plurality of individual layers having the same uniform layer thickness are adjacent to each other and the more individual layers having the uniform layer thickness are next to a front surface or next to a back surface of a digital twin;
- such that said plurality of individual layers having the same uniform layer thickness are adjacent to each other, a part of the more individual layers having the uniform layer thickness is next to a front surface and a part thereof is next to the back surface of a digital twin;
- such that said plurality of individual layers having the same uniform layer thickness are next to each other, one individual layer or more individual layers having the uniform layer thickness are in between said plurality of individual layers.

The layer stack of the digital twin of the spectacle lens to comprise the plurality of individual layers having the same uniform layer thickness is advantageous when the plurality of individual layers shall be printed as thin as possible. As thin as possible preferably is dependent on a fluid used for inkjet printing an individual layer and preferably is limited in that adjacent positioned ink droplets of said fluid coalesce to result in a continuous individual layer.

The layer stack to comprise one individual layer or more individual layers having a uniform layer thickness next to the front surface or next to the back surface may be useful, depending on a digital twin, in case more and/or smaller steps are required.

The layer stack to comprise one individual layer or more individual layers having a uniform layer thickness in between said plurality of individual layers may be advantageous, depending on a digital twin, in case a separation or a transition between individual layers of same uniform layer thickness but different interface forms is required.

Furthermore, inkjet printing of one non-continuous individual layer or more non-continuous individual layers for a predefined domain allows a minimization of a maximum distance between a print head and a non-continuous individual layer to be inkjet printed. For example, with respect to a minus-power spectacle lens as defined in ISO 13666:2019(E), section 3.10.18 (minus-power lens), being inkjet printed by individual layers starting from an individual layer resulting in a front surface of said minus-power spectacle lens, an edge thickness as defined in ISO 13666:2019(E), section 3.2.48, may be realized by inkjet printing one or more non-continuous individual layer(s) in a domain next to an edge only thus allowing in said domain the minimization of the maximum distance between the print head and a respective non-continuous individual layer to be inkjet printed.

The method being configured for calculating by a computer the digital twin of the spectacle lens for the purpose of the use of the digital twin for the manufacture of the spectacle lens, said digital twin of the spectacle lens comprising the layer stack with the individual layers, is preferably characterized in the step of
- determining said layer stack such that each individual layer having a non-uniform layer thickness comprises a minimum layer thickness and a maximum layer thickness having a ratio selected from at least one of the following:
   a) a ratio of a minimum layer thickness to a maximum layer thickness of maximum 1:4.5
   b) a ratio of a minimum layer thickness to a maximum layer thickness of maximum 1:3;
   c) a ratio of a minimum layer thickness to a maximum layer thickness of maximum 1:2;
   d) a ratio of a minimum layer thickness to a maximum layer thickness of maximum 1:1.5.

A form of an interface of an individual layer may replicate at least partially a curved lens surface of a front surface and/or a curved lens surface of a back surface of a digital twin of a spectacle lens, preferably according to any one of the variants described before. In case an individual layer, irrespective of whether being a continuous layer or a non-continuous layer, is defined by two closest interfaces whose forms are i) not replicating an identical curved lens surface, ii) not replicating an identical part or identical parts of an identical curved lens surface, iii) replicating an identical curved lens surface but both interfaces shifted to each other such that still an individual layer results, or iv) replicating an identical parts or identical parts of an identical curved lens surface but both interface shifted to each other such that still an individual layer results an individual layer with a non-uniform layer thickness. Such an individual layer with a non-uniform layer thickness, depending on a digital twin, may be useful to be embedded in a layer stack of the digital twin of a spectacle lens, for example, if two individual layers not matching to each other directly adjacent shall be arranged next to each other. The embedded individual layer(s) may be responsible in the layer stack for a smooth transition between individual layers with very different forms of their interfaces. This smooth transition may be an alternative to an abrupt change of directly adjacent two individual layers with very different forms of interfaces. The before mentioned ratios limiting the ratio between the minimum and the maximum layer thickness shall be a compromise allowing a good balance between a flexibility in arranging the individual layers in the layer stack and a rather simple manufacturing process.

The method being configured for calculating by a computer the digital twin of the spectacle lens for the purpose of the use of the digital twin for the manufacture of the spectacle lens, said digital twin of the spectacle lens comprising the layer stack with the individual layers, is preferably characterized in the step of
- determining said layer stack such that each individual layer is having a uniform refractive index, or
- determining said layer stack such a first set of individual layers is having a first uniform refractive index and a second set of individual layers is having a second uniform refractive index, or
- determining said layer stack such that a plurality of individual layer is having a non-uniform refractive index.

A "uniform refractive index" of an individual layer of a layer stack is defined as a same refractive index of an optical material of the individual layer. A uniform refractive index neglects refractive index differences of smaller than or equal to 0.001 of a same optical material that for example has been UV cured.

A "non-uniform refractive index" of an individual layer of a layer stack is defined as a refractive index distribution of an optical material or of optical materials within the individual layer. A non-uniform refractive index preferably means a refractive index difference of equal to or greater than 0.001 between different discrete x,y,z positions within the individual layer.

Determining said layer stack such that each individual layer is having a uniform refractive index combines the advantages of a curved slicing described before with a simpler implementation, for example, as only one printing material resulting in an individual printed layer of a uniform refractive index must be provided. In a digital twin of a spectacle lens having a predefined dioptric power defined analogously as in ISO 13666:2019(E), section 3.10.3, the higher a uniform refractive index for each individual layer of a layer stack of said digital twin is selected, for example, the less a difference in a curvature of a front surface and a curvature of a back surface of said digital twin might be sufficient to obtain said predefined optical power as when compared to a selected lower uniform refractive index for each individual layer of said layer stack. The higher the uniform refractive index for each individual layer then is selected, in turn, may result in a layer stack comprising fewer individual layers, fewer individual layers meaning fewer steps and thus fewer superelevations at an edge of a printed individual layer.

Determining said layer stack such that a first set of individual layers is having a first uniform refractive index and a second set of individual layers is having a second uniform refractive index may be preferred not only for a smart design of said layer stack but also in case said first set of individual layers is having a lower uniform refractive index and said second set of individual layers is having a higher uniform refractive index. Individual layers comprised in said first set then preferably are used for ensuring a stability of a spectacle lens manufactured by printing, preferably inkjet printing each individual layer of said layer stack, whereas individual layers comprised in said second set preferably are responsible for the dioptric power of said spectacle lens. Along with ensuring the stability of the spectacle lens, individual layers comprised in said first set are typically providing a higher transmission to the spectacle lens, whereas individual layers comprised in said second set typically are enabling a lower thickness of the spectacle lens. Thus, beneficial characteristics of each set are combined when using individual layers of different refractive indices. The individual layers comprised in said first set preferably are continuous individual layers, preferably of uniform layer thickness, whereas the individual layers comprised in said second set preferably are non-continuous individual layers, preferably of uniform layer thickness. In case a difference in refractive index between individual layers comprised in said first set and individual layers comprised in said second set is such that said difference might cause Fresnel reflection losses at interfaces between individual layers of different refractive index preferably a transition zone between those individual layers is calculated. Said transition zone preferably is calculated to comprise a refractive index gradient from an individual layer having a first refractive index and an adjacent layer having a second refractive index. In case said layer stack is determined such that a form of a non-continuous individual layer having a uniform layer thickness comprised in said first set replicates a curved lens surface according to any one of the variants described before, a form of an adjacent non-continuous individual layer having a uniform layer thickness comprised in said second set preferably replicates a same curved lens surface. Otherwise, a difference between a refractive index of said non-continuous individual layers of said first and second set might result in a printed, preferably inkjet printed spectacle lens, in a structure visible when looking through such a spectacle lens. Within each set of individual layers having a same refractive index changing a form of an interface preferably does not contribute to visible structures when looking through a resulting printed, preferably inkjet printed spectacle lens.

Determining said layer stack such that a plurality of individual layers is having a non-uniform refractive index may be preferred in case a spectacle lens manufactured by printing, preferably inkjet printing each individual layer of said layer stack, has an optical requirement that could not be met based on a corresponding layer stack comprising only individual layers having a uniform layer thickness.

The method being configured for calculating by a computer the digital twin of the spectacle lens for the purpose of the use of the digital twin for the manufacture of the spectacle lens, said digital twin of the spectacle lens comprising the layer stack with the individual layers, is preferably characterized in the step of
- determining said layer stack such that a form of each individual layer to a minimum thickness of said digital twin is replicating a same curved lens surface of said digital twin.

Preferably, when starting in a layer stack of a digital twin of a spectacle lens from a front surface or from a back surface an individual layer furthest away from a respective surface and defining a minimum thickness of said digital twin, i.e., defining a minimum distance between a front surface and a back surface of said digital twin, a form of each individual layer comprised in such an incomplete layer stack of said digital twin is replicating a same curved lens surface of said digital twin, preferably a same curved lens surface according to any one of the variants described before. From a process view, especially with respect to continuous individual layers of minus-power spectacle lenses, the minus-power spectacle lenses defined analogously as in ISO 13666:2019(E), section 3.10.18, printed, preferably inkjet printed, into a mould with a curved surface an incomplete layer stack of a respective digital twin of the minus-power spectacle lens, i.e., the layer stack until a minimum thickness of the digital twin ensures a workable minimum printing distance for each of said continuous individual layers. To obtain a complete layer stack for said digital twin a form of any residual individual layer preferably replicates a curved lens surface, preferably according to any one of the variants described before, such that a form of a front surface or a form of a back surface of said digital twin is met and such that added superelevations at an edge of printed individual layers are avoided.

The method being configured for calculating by a computer the digital twin of the spectacle lens for the purpose of the use of the digital twin for the manufacture of the spectacle lens, said digital twin of the spectacle lens comprising the layer stack with the individual layers, is preferably characterized in that
- for the curved lens surface having a curvature in one range selected from the group consisting of
   ∘ a range of from 200 mm to 1300 mm,
   ∘ a range of from 300 mm to 900 mm,
   ∘ a range of from 400 mm to 800 mm,
   ∘ a range of from 500 mm to 700 mm,
   each form of an interface replicate said curved lens surface,
- for the curved lens surface having a curvature in one range selected from the group consisting of
   ∘ a range of from 100 mm to below 200 mm,
   ∘ a range of from 120 mm to 180 mm,
   each form of an interface replicates an opposite curved lens surface.

Preferably, from a process view, replicating the curved lens surface having a curvature in one of the ranges mentioned before to replicate either the curved lens surface having the respective curvature or to replicate the opposite curved lens surface has as decisive advantage that the number of non-continuous individual layers is minimized.

The method being configured for calculating by a computer the digital twin of the spectacle lens for the purpose of the use of the digital twin for the manufacture of the spectacle lens, said digital twin of the spectacle lens comprising the layer stack with the individual layers, is preferably characterized in the step of
- manufacturing said spectacle lens based on said digital twin.

Preferably, a spectacle lens is manufactured by printing, preferably inkjet printing, individual layers determined for a respective digital twin as described before into a mould with a curved surface. Preferably, said mould is selected such that the curved surface of said mould determines a front surface or back surface of said spectacle lens without any, for example, additional polishing step. Said spectacle lens might be edged and coated, in any order, after having been printed, preferably inkjet printed.

Preferably, for manufacturing a spectacle lens, each individual layer of a determined layer stack of a respective digital twin of the spectacle lens is converted into a spatial volume element pattern. In said spatial volume element pattern a volume element serves as a virtual placeholder for an ink droplet. Preferably, for converting said digital twin into said spatial volume element pattern a print resolution of an inkjet printer, preferably an inkjet print head of the inkjet printer is considered. Said spatial volume element pattern preferably is transferred into printing instructions which, when the printing instructions are executed by an inkjet printer, cause the inkjet printer to print said spectacle lens in layers. Preferably, said printing instructions are computer-readable data comprising a stack of images, one image for each layer to be inkjet printed, for example tiff images, and a text file, for example in .xml format. Said text file preferably comprises instructions for an order in which said stack of images corresponding to said layer stack is to be inkjet printed. Said text file preferably further comprises process parameters that are required to inkjet print said spectacle lens in layers like a power of pinning LEDs to cure the ink droplets, said ink droplets preferably comprising a UV-curable fluid, and an increase of the z-position of an inkjet print head after having inkjet printed a layer to avoid collision of the inkjet print head with said inkjet printed layer.

The method being configured for manufacturing the spectacle lens is characterized in that the manufacturing comprises the step of
- inkjet printing a layer stack in a mould such that a printing distance for each individual layer of said layer stack is minimized.

Minimizing a printing distance apart from and/or additionally to a smart arrangement of individual layers of a digital twin of a spectacle lens, preferably as described before, might be realized when printing, preferably inkjet printing, individual layers into a concave mould having a mould opening with a rounded edge instead of a mould opening with a sharp edge. For example, with respect to a spectacle lens for which it is foreseen that it will be edged after having been printed, preferably inkjet printed, a mould opening with a rounded edged which might be overprinted, preferably reduces a sagitta of mould and therefore, a maximum printing distance.

When printing, preferably inkjet printing, a spectacle lens in layers into a concave mould a curvature of the concave mould and a diameter of a mould opening are in a mathematical context via an equation of sagitta. In this respect a surface of the mould is either a spherical surface as defined in ISO 13666:2019(E), section 3.4.1, or a mathematical fit to a spherical surface. For example, when printing, preferably inkjet printing, a spectacle lens in layers into a concave mould having
- a mould opening of a diameter in a range of 55 mm to 65 mm, a mould curvature in one of the following ranges of a) 100 mm to 1300 mm, b) 100 mm to 500 mm, c) 100 mm to 500 mm, or
- a mould opening of a diameter in a range of greater than 65 mm to 80mm, a mould curvature in one of the following ranges of a) 200 mm to 1300 mm, b) 300 nm to 1000 mm, c) 400 mm to 800 mm ensures a maximum printing distance preferably not exceeding a droplet displacement of 50µm.

This way of minimizing the distance cannot be done easily with convex moulds. If the highest point of the convex mould is printed upon, the print head has to be shifted upwards. Only if non-continuous layers are used the print head can remain at the same height.

For ink droplets which shall be placed in a concave mould or on a convex mould moved with a constant speed relative to a printhead of an inkjet printer air resistance is much greater than gravitation so that they are slowed down even in short distances between printhead and target position in or on a respective mould. For this reason, a droplet displacement of ink droplets which shall be positioned from a greater distance between printhead and target position is greater than a droplet displacement of ink droplets which shall be positioned from a smaller distance between printhead and target position.

The method being configured for manufacturing the spectacle lens is characterized in that
- said printing distance is adjusted by a thickness of an individual layer per individual layer having discrete z positions being equal or greater than a sagitta of mould.

From a process view, an adjustment of a printing distance per individual layer ensures that for printing individual layers above a mould opening, a minimum printing distance is ensured without any restrictions of the sagitta of mould not allowing a theoretically possible minimum printing distance.

The method being configured for manufacturing the spectacle lens is characterized in that
- each individual layer of said layer stack is inkjet printed over a mould opening of said mould.

From a process view superelevations occurring due to surface tension of a printing ink might be shifted to an area of a printed spectacle lens that shall not be optically used, for example that shall not remain in an edged spectacle lens. Thus, a smart arrangement of individual continuous layers in a digital twin of a spectacle lens is supported by this edge extension.

A computer is configured to perform the step of
- determining a layer stack of a digital twin of a spectacle lens such that a form of an interface of an individual layer replicates a curved lens surface of said digital twin,
   and an inkjet printer printing a spectacle lens according to said determined layer stack.

A data processing system comprising a processor and a storage medium coupled to the processor, wherein the processor is adapted to perform the steps described before with respect to the method based on a computer program stored on the storage medium.

A computer program comprises instructions which, when the program is executed by a computer, cause the computer to carry out the method described before.

The computer program may be stored on a non-transitory tangible computer-readable storage medium, the computer program comprising instructions which, when the program is executed by a computer, cause the computer to carry out the method described before.

A data signal may carry the before mentioned computer program.

A computer-readable storage medium has stored thereon the before mentioned computer program. The computer-readable storage medium may be a non-transitory computer-readable storage medium.
Figure 1 shows a layer stack of a digital twin of a spectacle lens in which forms of each interface are replicating the back surface.
Figure 2 shows a layer stack of a digital twin of a spectacle lens in which forms of each interface are replicating the front surface.
Figure 3 and 4 show layer stacks of digital twins of a spectacle lens in which forms of interfaces are replicating the front surface and forms of interfaces are replicating the back surface.

## Claims

1. Method being configured for calculating by a computer a digital twin of a spectacle lens having a curved lens surface for the purpose of a use of the digital twin for a manufacture of the spectacle lens, said digital twin of the spectacle lens comprising a layer stack with individual layers,
the method being **characterized in** the step of
- determining said layer stack such that a form of an interface of an individual layer replicates said curved lens surface of said digital twin.

2. Method according to claim 1, the method being **characterized in** the step of
- replicating said curved lens surface such that said form of said interface is one form selected from the following group of forms
∘ a form of a front surface,
∘ a form of a back surface,
∘ pieced up parts of a front surface,
∘ pieced up parts of a back surface,
∘ pieced up parts of a front surface and a back surface.

3. Method according to any one of the preceding claims, the method being **characterized in** the step of
- determining said layer stack such that a plurality of individual layers is having a uniform layer thickness.

4. Method according to any one of the preceding claims, the method being **characterized in** the step of
- determining said layer stack such that each individual layer is having a uniform refractive index,
or
- determining said layer stack such a first set of individual layers is having a first uniform refractive index and a second set of individual layers is having a second uniform refractive index, or
- determining said layer stack such that a plurality of individual layers is having a non-uniform refractive index.

5. Method according to any one of the preceding claims, the method being **characterized in** the step of
- determining said layer stack such that a respective form of each individual layer to a minimum thickness of said digital twin is replicating a same curved lens surface of said digital twin.

6. Method according to any one of the preceding claims, the method being **characterized in that**
- for the curved lens surface having a curvature in one range selected from the group consisting of
∘ a range of from 200 mm to 1300 mm,
∘ a range of from 300 mm to 900 mm,
∘ a range of from 400 mm to 800 mm,
∘ a range of from 500 mm to 700 mm,
each form of an interface replicate said curved lens surface,
- for the curved lens surface having a curvature in one range selected from the group consisting of
∘a range of from 100 mm to below 200 mm,
∘a range of from 120 mm to 180 mm,
each form of an interface replicates an opposite curved lens surface.

7. Method according to any one of the preceding claims, **characterized in** the step of manufacturing said spectacle lens based on said digital twin.

8. Method according to claim 7, **characterized in that** the manufacturing comprises the step of
- inkjet printing said layer stack in a mould such that a printing distance for each individual layer of said layer stack is minimized.

9. Method according to any one of claims 7 and 8, **characterized in that** said printing distance is adjusted by a thickness of an individual layer per individual layer having discrete z positions being equal or greater than a sagitta of mould.

10. Method according to any one of claims 7 to 9, **characterized in that** each individual layer of said layer stack is inkjet printed over a mould opening of said mould.

11. Computer being configured to perform the step of
- determining a layer stack of a digital twin of a spectacle lens such that a form of an interface of an individual layer replicates a curved lens surface of said digital twin,
and an inkjet printer printing a spectacle lens according to said determined layer stack.

12. Computer program comprising instructions which, when the program is executed by a computer, cause the computer to carry out the method of any one of claims 1 to 6.
